# EUROPEAN PATENT APPLICATION

(11) **EP 0 802 506 A1**
(43) Date of publication of application: **22.10.1997**
(21) Application number: 97200246.3
(22) Date of filing: 29.01.1997
(51) Int. Cl.: G06K 19/077

(54) **Modular chip card system with function modules**

(30) Priority: 29.01.1996 NL 1002195
(71) Applicant: N.V. Nederlandsche Apparatenfabriek NEDAP, NL-7141 DE Groenlo (NL)
(72) Inventor: Hogen Esch, Johannes Harm Lucas, 7122 ZN Aalten the Netherlands (NL)
(74) Representative: Smulders, Theodorus A.H.J., Ir.

(57) **Abstract**

The invention relates to a modular chip card system with function modules which, either separately or in a combination of functions, are accommodated in standardized chip cards with contacts. The required electrical connections between the basic chip card, which for example comprises an electronic purse, and one or more function modules are effected through the stacking of these modules, by means of electric contacts provided on two sides in the modules at positions corresponding with the electric contacts of the basic chip card. Possible function modules are, for example, a user interface, a battery module, standardized or non-standardized wireless interface modules, tone modulation modem module, and data logger module.

## Description

The invention relates to a modular chip card system comprising at least one card-like electronic chip card with electrical contacts or terminals, such as a chip purse or smart card.

The smart card or electronic chip card has gradually become a familiar item in telephone traffic and financial traffic. A large number of pilot projects have already taken place and projects are still taking place in this field, and much knowledge and experience have already been gained, both on the side of users and on the side of the supplying industry. International standardization is well on its way, and we are at the beginning of the introduction of this technology on a very large scale.

The chip card provided with contacts is mainly used with the functions of identification and electronic purse. The identification function, to gain access to services or goods offered by service providers or retailers, and the electronic purse function to pay for these services or goods without the need of on-line communication with, for example, a bank to check the buyer's solvency.

Along with the use of the chip card there has arisen a need for a number of secondary functions that can be carried out by means of the chip card and are universal for all forms of chip cards offered.

As an example, the following secondary functions may be mentioned: checking the balance; wireless communication with the chip card through medium-frequency radiowaves, microwaves or infrared light; safeguarding the use of the chip card by a personal identification number (PIN); Dial-Tone-Multi-Frequency (DTMF) tone modulation modem for replenishing the balance in the card by charging a bank account over the telephone or for effecting a payment transaction in the same way; data-logger function for temporarily recording what transactions have been carried out with the card; and wireless identification function for admission. This list, of course, is not exhaustive, but only enumerates a number of possible secondary functions.

This large variation in possible secondary functions goes to show that the need for one or more of these functions will be rather different for each user, and that these should preferably be tailored to the user's personal situation and wishes.

The invention has for its object to meet this need and is characterized in that the system further comprises at least one card-like electronic function module card including at least one function module, such as, for example, a user interface or a source of voltage, the dimensions of the surface of said at least one function module card being at least substantially equal to the dimensions of the chip card's surface, or an integral multiple thereof, said at least one function module card further comprising electrical terminals for effecting, through stacking said chip card and said at least one function module card, an electrical connection between the chip card and said at least one function module card to enable the stack of cards to perform a given application.

As, in accordance with the invention, the chip card can be electrically connected to various function module cards at the user's choice by stacking the chip card and these function module cards, the peripheral functions referred to can be carried out at choice.

The invention also relates to a function module card and a card holder of the system.

The invention will be further elucidated with reference to the drawings. In the drawings:
Fig. 1A shows a possible form of the reverse side of a chip card of a possible embodiment of the system according to the invention;
Fig. 1B shows a possible form of the front of the chip card shown in Fig. 1A;
Fig. 2A shows the reverse side of a function module card according to the invention, formed as a user interface;
Fig. 2B shows the face of the function module card of Fig. 2A;
Fig. 3A shows the reverse side of an alternative embodiment of a function module card of the system according to the invention;
Fig. 3B shows the face of the function module card shown in Fig. 3A;
Fig. 4 shows a stack of cards of the system according to the invention, made up of a chip card and function module cards;
Fig. 5 shows a possible embodiment of a card holder according to the invention;
Fig. 6 shows an alternative embodiment of a function module card or a chip card according to the invention; and
Fig. 7 shows an alternative embodiment of a card holder of the system according to the invention.

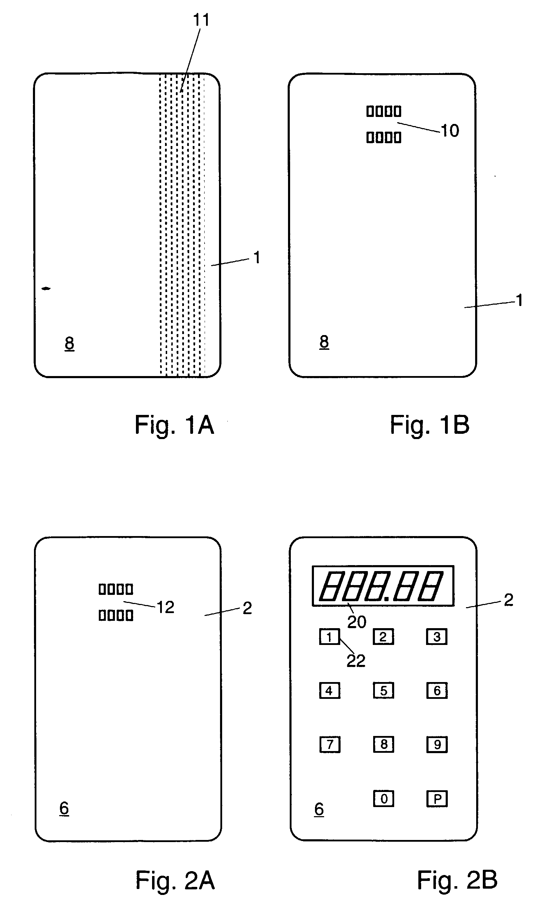

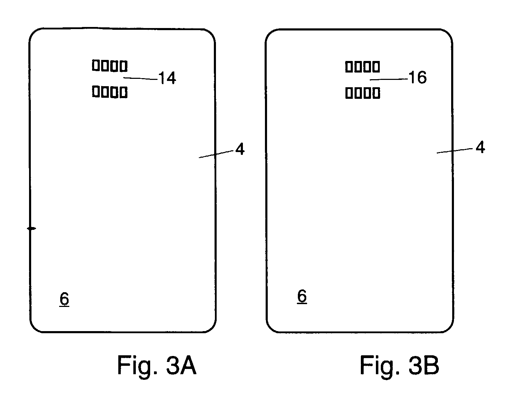

The modular chip card system according to the invention comprises at least one card-like electronic chip card 1 (see Figures 1A and 1B). In this example, the system further comprises card-like electronic function module cards 2, 4, such as, for example, a function module card 2 (see Figures 2A and 2B) comprising a user interface, and a function module card 4 (see Figures 3A and 3B) comprising a power source, such as a battery. In this example, the dimensions of the surface 6 of the function module cards 2, 4 correspond at least substantially to the dimensions of the surface 8 of the chip card.

In this example, chip card 1 is provided at its face (Figure 1B) with terminals 10 and at its reverse side (Figure 1A) with a magnetic strip 11. These terminals 10 may consist of metallic conductors known per se. The function module card 2 is also provided with terminals 12 at its reverse side. The position of terminals 12 corresponds to the position of terminals 10. Furthermore, function module 4 is provided with terminals 14, 16 at both its face and its reverse side. The positions of these terminals 14, 16, too, correspond to those of terminals 10.

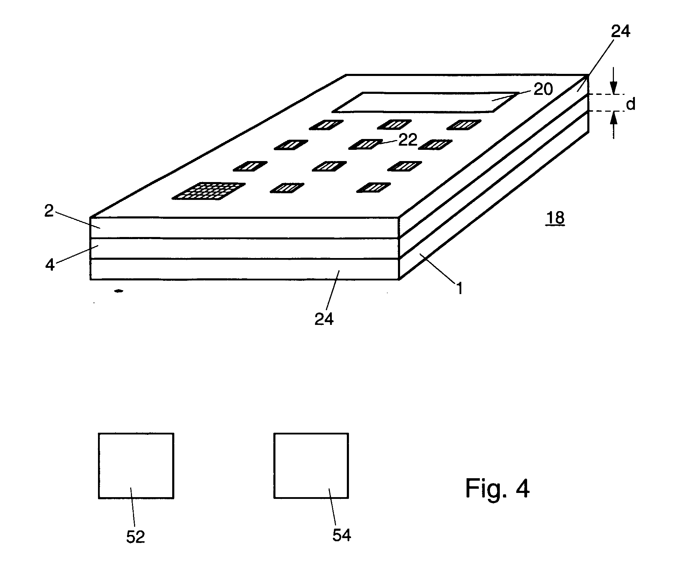

Now, when a stack 18 of these cards is formed (see Figure 4), with the lowermost card of stack 18 being chip card 1, the middle card of stack 18 being function module card 4, and the top card of stack 18 being function module card 2, terminals 10 in the stack are connected to terminals 14, and, similarly, terminals 16 are connected to terminals 12. Depending on the tasks of the function module cards referred to, various peripheral functions can now be carried out. If, for example, chip card 1 is a chip purse, while function module card 2 is formed as a user interface with communication means, such as, for example, a display 20 and operating elements 22, the balance of the chip purse can be read out on display 20, for example, through operation of operating elements 22 by a user. Also, for example, access to chip card 1 may be safeguarded with a PIN code through the operation of operating elements 22. As card 2, which in this example comprises the keyboard and/or the display, will always be the top card in a stack 18, it is not necessary for this card to be provided with terminals at its face, too. In this example the power source of function module card 4 provides the stack with power for carrying out the functions referred to.

The modular chip card system according to the invention accordingly comprises function modules accommodated, either separately or in a combination of functions, in generally flexible cards with the same dimensions as the electronic chip card, which chip card forms the basis of the whole system and, for example, satisfies the International Standard ISO-7816.

In the above example, the current from a battery included in function module card 4 is passed through function module 2 to be subsequently supplied, after switch-on by means of an operating element 22 of function module card 2, through an electronic switch to the electronic chip card 1 and any other modules in the stack. For this, use can be made, for example, of one of the terminals which otherwise are not used, such as, for example, the terminal for the programming voltage, which terminal is optionally not carried through in function module card 4. The current from the battery can be switched off with an appropriate operating element 22 of function module card 2, or, for example, automatically when no operating elements have been operated by a user during a given period of time. As the several function modules cannot, and need not, function as an independent chip card in a chip card reader, it is not absolutely necessary for the function module cards to have the standardized thickness d (see Figure 4) of the chip card. On the other hand it is recommendable that a multiple of the standard thickness of chip card 1 be used for the thickness of the other function module cards. Thus a stack 18 will always have a height equal to a multiple of the standard thickness of chip card 1.

Preferably, the cards are stacked squarely one on top of the other, so that the edges 24 of the cards in the stack 18 coincide. Thus the electrical terminals referred to are positioned so as to effect an electrical connection.

In this example, the terminals of adjacent cards are connected directly to each other.

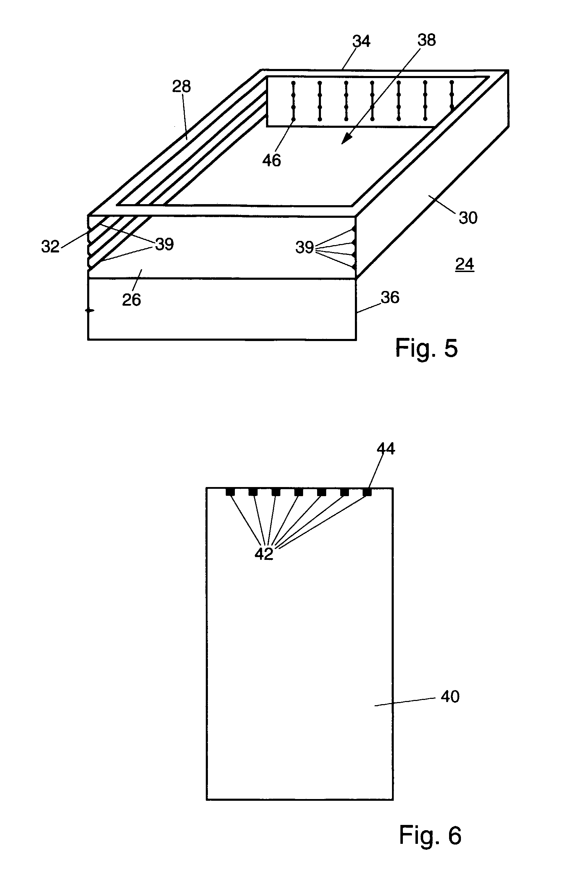

In a particular embodiment, the system further comprises a card holder 24 as shown in Figure 5. Card holder 24 is capable of receiving a stack of cards, for example, one consisting of a chip card 1 and at least one function module card 2, 4. In the example of Figure 5, the holder is box-shaped and includes a bottom 26, a top wall 28 and upright sidewalls 32-36. In the example of Fig. 5, the upright sidewall 36 is hinged to bottom 26, and shown folded down to clear an opening through which cards can be slid into and out of the holder. Top wall 28 is provided with a window 38 for viewing and/or operating the top card, for example, card 2 of stack 18. Window 38 may be fully open or, for example, be covered with flexible, transparent plastics. The opposing sidewalls 30, 32 are equipped with guide grooves 39 for receiving the longitudinal edges of the cards of the stack. As a result the cards are kept in a neat stack in the holder.

Fig. 6 shows by way of example the face of an alternative embodiment of a card 40 (chip card and/or function module card) according to the invention. In it, the electrical terminals 42 of the card are positioned adjacent to a peripheral edge 44 of the card. Holder 24 is provided with electrical terminals 46 on the inside of its end wall 34. When a first card 40 is slid into the holder of Figure 5, the terminals 42 of card 40 will be connected in an electrically conductive manner to the terminals 46 of holder 24. When, subsequently, a second card 40 is moved into holder 24, the terminals 42 of this second card will be connected to terminals 46 of the holder. The result is that the terminals 42 of the first card 40 will be connected through the terminals 46 of the holder to the terminals 42 of the second card 40.

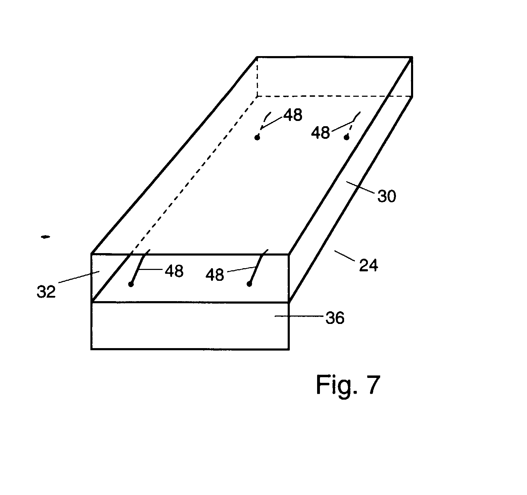

When the cards are provided with terminals as shown in Figures 1 - 3, the terminals 46 of holder 24 can naturally be omitted. The holder may further be provided with spring means 48 (see Figure 7), disposed, for example, on the bottom 26 of the holder, for keeping the stack of cards placed in the holder pressed together. In that case the guide grooves 39 in the opposite sidewalls 30, 32, referred to hereinbefore, can be omitted.

In the example of Figures 2A and 2B, the system includes at least one function module card arranged as a user interface and, to this effect, provided on one side with communication means 20, 22 for communication with a user. As stated before, this card is arranged to be used as the top card in a stack. The communication means may include operating elements, such as keys 20, a display 22 and/or a sound generator 50 (see Figure 4). In this example, the terminals are disposed on the reverse side and the operating elements, the sound generator and/or the display on the face of function module card 2.

A function module card, such as function module card 2 or 4, may further be provided with a wireless interface in order that, when this card has been included in stack 18 together with chip card 1, communication may be possible between a card reader 52 (see Figure 4) and chip card 1.

It is also possible for at least one function module card 2, 4 to be provided with a wireless interface in order that, when this card has been included in stack 18 along with chip card 1, communication by means of infrared light may be possible between a transmitter and/or receiver 54 (see Figure 4), on the one hand, and the chip card, on the other.

In addition, it is possible for at least one function module card 2, 4 to be provided with a wireless interface in order that, when this card has been included in stack 18 along with chip card 1, communication by means of electromagnetic microwaves may be possible between transmitter and/or receiver 54 and chip card 1.

It is also possible for a function module card to be provided with a DTMF in order that, when this card has been included in a stack along with the chip card, there may be communication between the chip card and an appropriate computer through a standard telephone set.

More specifically, at least one function module card 2, 4 is arranged to function as a data logger in which actions, such as financial transactions carried out with the chip card, are recorded, the data logger being arranged to read out the recorded data again later.

Preferably, the system is adapted for the assembly of a stack 18 including at least a chip card 1, a function module card 4 with a power source, a function module card 2 with a user interface, and possibly still other function module cards, with the supply voltage being passed from function module card 4 with the power source, through function module card 2 with the user interface to chip card 1 and any further function module cards of stack 18. In this arrangement, function module card 2 may further be arranged as a switch. The function module card supplies the supply voltage to chip card 1 and any other function module cards of stack 18 when a communication means 22 of function module card 2 is actuated by a user. Thereafter, when a user again actuates communication means 22, and/or when there has been no actuation of communication means 22 for some time, the function module card can interrupt the supply of voltage.

Alternatively, the system is adapted for the assembly a stack comprising at least a chip card 1, a function module card 4 with a power source, a function module card 2 with a wireless interface and possibly other function module cards. In this arrangement the function module card with the wireless interface is arranged so that the supply voltage is passed from the function module card with the power source through the function module card with the wireless interface to chip card 1 and any other function module cards.

Preferably, the function module card 2 with the wireless interface is further arranged as a switch which supplies the supply voltage from interface card 4 to chip card 1 and any further function module cards when a pre-determined transmission signal is generated by transmitter 52, 54, which signal is received by the wireless interface.

The interruption of the supply voltage by means of the switch can be accomplished when a pre-determined signal from transmitter 54 is received and/or when no transmission signal has been received for some time.

Another combination of basic chip card 1 and function modules is, for example, a pack of three cards, with the bottom card 1 being the standard chip card according to ISO-7816, the middle function module card 2 being a battery module, and the top function module card 4 being a wireless interface according to the ISO-10536 standard, or according to the future ISO-14443 standard. With this combination of chip card and function modules it is possible to communicate with a standard contact chip card by the likewise standardized wireless route, so that communication with a standard wireless reader is possible. In this example, too, the interface module can be provided with circuitry which passes the current from the battery to the contact chip card when the electromagnetic carrier wave of the wireless reader 52 is detected, and interrupts the current again in the absence of communication with the reader during a given period of time. Also, the clock signal for the processor of chip card 1 can be derived from this carrier wave. Naturally, in the above example it is possible to use an interface module which communicates by means of infrared light, or with electromagnetic microwaves with a frequency of, for example, 2.45 GHz or 5.8 GHz, along with associated transceivers.

The function modules referred to can be combined in all sorts of combinations to realize a chip card system which satisfies the demands which the user makes upon this system, while the basic chip card can be removed in a simple manner to be used to realize functions offered in the existing infrastructure, such as, for example, using the public telephone system, or paying with the electronic purse.

The invention is not limited to the embodiments outlined hereinbefore in any way. Thus a function module card may be provided with more than one function module. Also, a function module may be included which is distributed over two function module cards. For the sake of simplicity this is yet referred to as a function module card provided with a function module. It is also possible for a function module card to have a surface area equal to a multiple of the area of the standard chip card 1. In that case this function module card can accommodate two or more stacks of other cards.

Such variants are all considered to fall within the scope of the invention.

## Claims

1. A modular chip card system comprising at least one card-like electronic chip card with electrical contacts or terminals, such as a chip purse or a smart card, characterized in that the system further comprises at least one card-like electronic function module card including at least one function module, such as, for example, a user interface or a source of voltage, the dimensions of the surface of said at least one function module card being at least substantially equal to the dimensions of the surface of the chip card, or an integral multiple thereof, said at least one function module card further comprising electrical terminals for effecting, through stacking said chip card and said at least one function module card, an electrical connection between the chip card and said at least one function module card for the performance of a given application by the stack of cards.

2. A modular chip card system according to claim 1, characterized in that the dimensions of the surface of said at least one function module card are at least substantially equal to the dimensions of the surface of said chip card, the electrical terminals of said chip card and said at least one function module card being so positioned that said electrical connection is brought about when the chip card and the at least one function module card are stacked straightly one on top of the other.

3. A modular chip card system according to claim 1 or 2, characterized in that the system comprises at least two function module cards arranged to perform different functions in co-operation with said chip card when said chip card and said at least two function module cards are stacked together and interconnected through their terminals.

4. A modular chip card system according to any one of the preceding claims, characterized in that the system comprises at least two function module cards which by being stacked are interconnected through their terminals.

5. A modular chip card system according to any one of the preceding claims, characterized in that said terminals of adjacent cards in a stack are directly interconnected.

6. A modular chip card system according to claim 5, characterized in that the system comprises at least one function module card that is provided with terminals on both sides so that it is designed to be received between two cards in a stack.

7. A modular chip card system according to claim 5 or 6, characterized in that the system comprises at least one function module card provided with terminals at one side only, so that this card is designed to be received in a stack of cards as the top or bottom card.

8. A modular chip card system according to any one of claims 1-4, characterized in that the system further comprises a card holder arranged to receive a stack of said cards comprising a chip card and at least one function module card.

9. A modular chip card system according to claim 8, characterized in that the holder is provided with electrical terminals, the terminals of the chip card and of said at least one function module card being interconnected through the electrical terminals of the holder when the stack of cards has been slid into the holder.

10. A modular chip card system according to claim 9, characterized in that the electrical terminals of the cards are disposed adjacent to side edges of the cards.

11. A modular chip card system according to claim 8, 9 or 10, characterized in that the holder is provided with spring means or clamping means for keeping the stack of cards placed in the holder pressed together.

12. A modular chip card system according to any one of claims 8-11, characterized in that said holder is box-shaped and has a bottom, a top wall, and upright sidewalls connecting said bottom and said top wall together, one of said sidewalls having an optionally closable opening therein for said cards to be slid into and out of the holder.

13. A modular chip card system according to claim 12, characterized in that the top wall is provided with a window for a user to view and/or operate the top card of a stack of cards slid into the holder.

14. A modular chip card system according to any one of claims 8-13, characterized in that the sidewalls of the holder are provided with guide grooves for receiving the longitudinal edges of cards of a stack of cards slid into the holder.

15. A modular chip card system according to claims 12 and 14, characterized in that said guide grooves are formed in opposing sidewalls of the holder.

16. A modular chip card system according to any one of the preceding claims, characterized in that the system comprises at least one function module card arranged as a user interface and, to this effect, provided on one side with communication means for communication with a user, so that this card is designed to be used as the top card of a stack of cards.

17. A modular chip card system according to claim 16, characterized in that said communication means comprise operating elements, a sound generator and/or a display.

18. A modular chip card system according to claims 7 and 17, characterized in that the terminals are disposed on a first side and the operating elements, the sound generator and/or the display on a second side of the function module card.

19. A modular chip card system according to any one of the preceding claims, characterized in that at least one function module card is provided with a power source, such as a battery, for supplying electric power to other cards of a stack constituted by cards of the system.

20. A modular chip card system according to any one of the preceding claims, characterized in that at least one function module card is provided with a wireless interface for communication between a card reader and the chip card when said function module card is included in a stack of cards along with said chip card.

21. A modular chip card system according to any one of the preceding claims, characterized in that at least one function module card is provided with a wireless interface for communication by means of electromagnetic waves between a transmitter and/or receiver and the chip card when said function module card is included in a stack of cards along with said chip card.

22. A modular chip card system according to claim 21, characterized in that said wireless interface is arranged for communication by means of electromagnetic microwaves or infrared light.

23. A modular chip card system according to any one of the preceding claims, characterized in that at least one function module card is provided with a DTMF (Dial-Tone-Multi-Frequency) tone modulation modem, so that when this card is included in a stack of cards along with the chip card, there may be communication of said chip card with an appropriate computer through a standard telephone set.

24. A modular chip card system according to any one of the preceding claims, characterized in that at least one function module card is arranged to function as a data logger in which actions, such as, for example, financial transactions carried out with said chip card, are recorded, the data logger being arranged to read out the recorded data again later.

25. A modular chip card system according to any one of the preceding claims, characterized in that the system is arranged to compose a stack of cards comprising at least a chip card, a function module card with a power source, a function module card with a user interface, and optionally still further function module cards, the supply voltage being supplied from the function module card with the power source through the function module card with the user interface to the chip card and any further function module cards.

26. A modular chip card system according to claims 16 and 25, characterized in that the function module card with the user interface is also arranged as a switch, and supplies the supply voltage to the chip card and any further function module cards when one of the communication means is actuated by a user.

27. A modular chip card system according to any one of the preceding claims, characterized in that the system is arranged to compose a stack of cards comprising at least a chip card, a function module card with a power source, a function module card with a wireless interface, and optionally further function module cards and wherein, in use, the supply voltage is supplied from the function module card with the power source through the function module card with the wireless interface to the chip card and any further function module cards.

28. A modular chip card system according to claims 21 and 27, characterized in that the function module card is also arranged as a switch, and supplies the supply voltage to the chip card and any further function module cards when a pre-determined transmission signal is generated by the transmitter, which is received by the wireless interface.

29. A modular chip card system according to claim 26, characterized in that the function module card interrupts the supply of the supply voltage when a user actuates the communication means and/or in the absence of any actuation of the communication means for some time.

30. A modular chip card system according to claim 28, characterized in that the function module card interrupts the supply of supply voltage when a pre-determined transmission signal is received from the transmitter and/or when no transmission signal has been received anymore for some time.

31. A function module card of the system according to any one of the preceding claims.

32. A card holder of the system according to any one of claims 8-15.
